# EUROPEAN PATENT APPLICATION

(11) **EP 0 878 943 A1**
(43) Date of publication of application: **18.11.1998**
(21) Application number: 97401075.3
(22) Date of filing: 14.05.1997
(51) Int. Cl.: H04M 1/57, H04M 1/00

(54) **Telecommunication device**

(71) Applicant: ALCATEL ALSTHOM COMPAGNIE GENERALE D'ELECTRICITE, 75008 Paris (FR)
(72) Inventor: Angot, Frederic, 67150 Gerstheim (FR)
(74) Representative: Schätzle, Albin, Dipl.-Phys.

(57) **Abstract**

Known telecommunication devices for providing calling line identification in response to an identification signal transmitted between two rings of a ringing signal are not suitable for use in large numbers. By providing said telecommunication device with a predefined impedance to be activated or switched on during said identification signal and to be deactivated or switched off during said rings, said device operates in a better defined way which allows it being used by each one of a large number of subscribers in for example a telecommunication network.

## Description

The invention relates to a telecommunication device comprising
- an input for receiving a signalling signal comprising a ringing signal and an identification signal, and
- a detector coupled to said input for detecting said signaling signal.

Such a telecommunication device, like a telephone device or a facsimile apparatus, is for example known from FR 2727271, which discloses an analog telecommunication system, in which an identification signal with identification information of a caller is transmitted between the first and the second ring of a ringing signal to the telecommunication device of the person to be called. This telecommunication device comprises a detector for detecting a signaling signal comprising said ringing signal and said identification signal.

The disclosed telecommunication device is disadvantageous, inter alia, because of being designed for a testing environment, and therefore being insufficiently suitable to be used in large numbers.

It is an object of the invention, inter alia, to provide a telecommunication device as described in the preamble which can be used in large numbers.

Thereto the telecommunication device according to the invention is characterised in that said detector comprises
- a predefined impedance, and
- a timing circuit for, in dependence of detection of said ringing signal, activating said predefined impedance during a first timeinterval, said predefined impedance being deactivated during a second timeinterval neighbouring said first timeinterval.

By activating inside said detector a predefined impedance during a first timeinterval and deactivating it during a second timeinterval, said first timeinterval for example partly corresponding with said identification signal and said second timeinterval for example partly corresponding with a ring of said ringing signal, the telecommunication device operates in a better defined way and is therefore suitable for use in large numbers, for example in a telecommunication network.

The invention is based on the insight that there should be well defined situations for the ringing signal as well as for the identification signal.

The problem of a known telecommunication device operating in an undefined way is thus solved by distinguishing at least two timeintervals inside said device and by activating a predefined impedance during one of said timeintervals and deactivating said impedance during the other timeinterval.

At least a part of the inventivity of said solution is situated is the observation that the ringing situation and the identification situation are different from one another and mutually separated.

The telecommunication device according to the invention offers the possibility of introducing calling line identification for analog subscribers, which is very advantageous.

A first embodiment of the telecommunication device according to the invention is characterised in that said first timeinterval is situated between two subsequent rings of said ringing signal.

By locating said first timeinterval between two subsequent rings of said ringing signal the predefined impedance is only activated during the absence of rings.

A second embodiment of the telecommunication device according to the invention is characterised in that said timing circuit comprises
- a first timer for generating a first timing signal in response to detection of a first ring, an expiry of said first timing signal indicating a start of said first timeinterval, and
- a second timer for generating a second timing signal in response to said expiry of said first timing signal, an expiry of said second timing signal indicating an expiry of said first timeinterval.

The first timing interval is thus situated between two rings because of the first timing signal having a first duration and guaranteeing the expiry of a first ring and because of the second timing signal having a second duration and together with the first timing signal guaranteeing the expiry of the first timeinterval before the start of a second ring. The first timer and the second timer could of course for example be realised by using the same timing software of a processor and/or by using one hardware counter and one hardware value detector detecting at least two different values of said counter.

A third embodiment of the telecommunication device according to the invention is characterised in that said timing circuit comprises a switch for making a coupling between a first subinput and a second subinput of said input via said predefined impedance in case of said predefined impedance being activated, and for interrupting said coupling in case of said predefined impedance being deactivated.

Said switch for example being an opto-coupler or a relais offers the possibility of making a coupling between both subinputs via said predefined impedance during activation and interrupting said coupling during deactivation, whereby said predefined impedance during activation is in a parallel position with respect to for example a modem which is also coupled with both subinputs for receiving and/or transmitting an identification signal.

A fourth embodiment of the telecommunication device according to the invention is characterised in that said switch comprises a transistor which is in a conductive, saturated state when said coupling has been made and which is in a non-conductive state when said coupling has been interrupted.

Compared to using an opto-coupler and/or a relais, the use of a transistor is very advantageous. It is switched into saturation for conducting an ac-current.

A fifth embodiment of the telecommunication device according to the invention is characterised in that said switch comprises a further transistor, a first main electrode of said transistor being coupled to said first subinput, a second main electrode of said transistor being coupled to a first main electrode of said further transistor, a second main electrode of said further transistor being coupled to said second subinput, and both control inputs of both transistors being mutually coupled such that both transistors are in a conductive, saturated state when said coupling has been made and are in a non-conductive state when said coupling has been interrupted.

The use of two transistors allows, during a non-conductive state, a better deactivation of said predefined impedance with respect to both subinputs.

A sixth embodiment of the telecommunication device according to the invention is characterised in that said predefined impedance comprises a passive element being situated between a subinput and said switch.

Such a passive element could be for example a resistor, a capacitor or an inductance, or could be a combination of said elements, like for example a parallel circuit of a resistor and a capacitor.

A seventh embodiment of the telecommunication device according to the invention is characterised in that said predefined impedance comprises a further passive element being situated between a further subinput and said switch, added values of both passive elements together forming said predefined impedance.

Neither from FR 2727271, which discloses an analog telecommunication system, in which an identification signal with identification information of a caller is transmitted between the first and the second ring of a ringing signal to the telecommunication device of the person to be called, nor from GB 2279203, which discloses a calling party identification apparatus, is it known to activate/deactivate said predefined impedance.

All references including further references cited with respect to and/or inside said references are considered to be incorporated in this patent application.

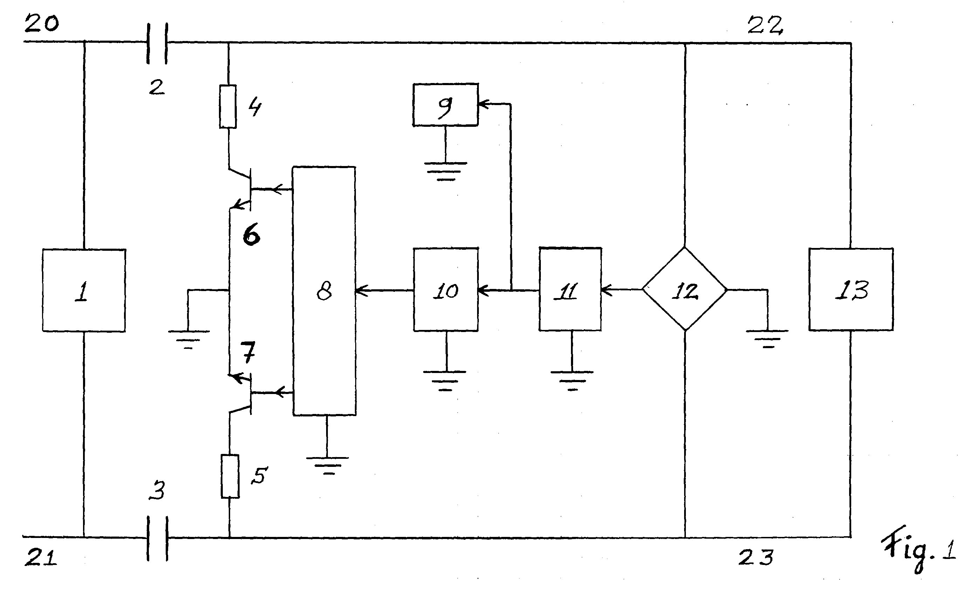

The invention will be explained in greater detail at the hand of an embodiment disclosed in the drawing, whereby
figure 1 discloses an embodiment of a telecommunication device according to the invention.

The telecommunication device according to the invention disclosed in figure 1 comprises a telephony circuit 1 connected to lines 20 and 21. Line 20 is coupled to line 22 via a capacitor 2, and line 21 is coupled to line 23 via a capacitor 3. A modem 13 is connected to lines 22 and 23, and ac-inputs of a diode bridge 12 are connected to lines 22 and 23, one dc-output of said diode bridge 12 being coupled to an input of a detector 11 and an other dc-output of said diode bridge 12 being coupled to earth. An output of said detector 11 is coupled to an input of a ringing circuit 9 and to an input of a timing circuit 10. An output of said timing circuit 10 is coupled to an input of a control circuit 8, of which a first output is coupled to a control electrode of a first transistor 6, and of which a second output is coupled to a control electrode of a second transistor 7. Of both transistors 6 and 7 two main electrodes are mutually coupled and coupled to earth, an other main electrode of said first transistor 6 being coupled to line 22 via an impedance 4 like a resistor 4, and an other main electrode of said second transistor 7 being coupled to line 23 via an impedance 5 like a resistor 5. Said control circuit 8, ringing circuit 9, detector 11 and timing circuit 10 are further coupled to earth.

The telecommunication device, or (according to this embodiment) analog telephone, as disclosed in figure 1 functions as follows. A signalling signal comprising a ringing signal and comprising, for example between the first and the second ring, an identifcation signal arrives at lines 20 and 21, which together form an input of said analog telephone, with for example line 20 being a first subinput and line 21 being a second subinput, and passes capacitors 2 and 3 towards lines 22 and 23. Diode bridge 12 rectifies said first ring of said ringing signal, and supplies a dc-signal to detector 11, which detects said rectified first ring of said ringing signal. Via its output, detector 11 informs said ringing circuit 9 and said timing circuit 10, in response to which ringing detector 9 generates a ring, and timing circuit 10 generates a first timing signal having a duration such that an expiry of said first timing signal is situated after an expiry of said first ring, and then timing circuit 10 generates a second timing signal in response to said expiry of said first timing signal, said second timing signal having a duration such that an expiry of said second timing signal is situated before a start of said second ring. In response to said second timing signal, which for example is supplied by timing circuit 10 via its output to control circuit 8, both transistors 6 and 7 are switched into saturation. Due to this, during the presence of said second timing signal (or in other words, between the first and the second ring and without overlap), a series circuit of both resistors 4 and 5 is present between line 22 and 23, with the added values of both resistors 4 and 5 together forming a predefined impedance to be defined by for example a Network Operator. During these first and second rings the identification signal with identification information of a caller can be generated and supplied to said modem 13 for for example displaying said identification information on a display, thereby providing so-called calling line identification. During the first and the second ring, both transistors 6 and 7 are in a non-conductive state, as a consequence of which both resistors 4 and 5 are deactivated.

So, by activating said predefined impedance during the receival of said identification signal between two rings, and by deactivating said predefined impedance before and after said activation, for example during said rings, the telecommunication device operates in a better defined way, which allows it being used by each one of a large number of subscribers in for example a telecommunication network.

Said detector 11 comprises for example a voltage level detector for comparing said dc-signal originating from diode bridge 12 with a predefined voltage level. Such a voltage level detector could for example be realised by a person skilled in the art by using a comparator or a combination of a transistor and a voltage level diode.

Inside said timing circuit 10, said first timing signal could for example be generated by a first timer like a first monostable multivibrator, and said second timing signal could for example be generated by a second timer like a second monostable multivibrator.

Said modem 13 and ringing circuit 9 and telephony circuit 1 are of common general knowledge to a person skilled in the art, and can be bought in shops.

Inside said control circuit 8 said second timing signal is converted into for example two control signals destined for both transistors 6 and 7. These control signals switch both transistors 6 and 7 into saturation, for example by supplying more control current than strictly necessary in view of the main current. This could be realised by using current sources known to a person skilled in the art.

The term input does not exclude further signals leaving said device, and should therefore be read as in/output, or input and/or output. Due to the amplitude of said identification signal in general being smaller than the added values of two threshold voltages of two diodes of a diode bridge, said identification signal is not jammed by said diode bridge. Both capacitors 2 and 3 block any dc-signals originating from lines 20 and 21. Said telephony circuit 1 comprises a further diode bridge for preventing polarity problems, and comprises of course for example a Dual Tone Multi Frequency (DTMF) circuit and loudspeaker and microphone etc. The term predefined impedance comprises for example one or more passive elements like a resistor, a capacitor and/or an inductance, but could also (in addition to or instead of said passive elements) comprise (and therefore does not exclude the use of) one or more active elements known to a person skilled in the art. The use of said active elements could be advantageous because of having activation/deactivation possibilities.

## Claims

1. Telecommunication device comprising
- an input (20,21) for receiving a signalling signal comprising a ringing signal and an identification signal, and
- a detector (11,12) coupled to said input (20,21) for detecting said signaling signal,
characterised in that said detector (4,5,10,11,12) comprises
- a predefined impedance (4,5), and
- a timing circuit (10) for, in dependence of detection of said ringing signal, activating said predefined impedance (4,5) during a first timeinterval, said predefined impedance (4,5) being deactivated during a second timeinterval neighbouring said first timeinterval.

2. Telecommunication device according to claim 1, characterised in that said first timeinterval is situated between two subsequent rings of said ringing signal.

3. Telecommunication device according to claim 2, characterised in that said timing circuit (10) comprises
- a first timer for generating a first timing signal in response to detection of a first ring, an expiry of said first timing signal indicating a start of said first timeinterval, and
- a second timer for generating a second timing signal in response to said expiry of said first timing signal, an expiry of said second timing signal indicating an expiry of said first timeinterval.

4. Telecommunication device according to claim 1, 2 or 3, charaterised in that said timing circuit (6,7,8,10) comprises a switch (6,7) for making a coupling between a first subinput (20) and a second subinput (21) of said input (20,21) via said predefined impedance (4,5) in case of said predefined impedance (4,5) being activated, and for interrupting said coupling in case of said predefined impedance (4,5) being deactivated.

5. Telecommunication device according to claim 4, characterised in that said switch (6,7) comprises a transistor (6) which is in a conductive, saturated state when said coupling has been made and which is in a non-conductive state when said coupling has been interrupted.

6. Telecommunication device according to claim 5, characterised in that said switch (6,7) comprises a further transistor (7), a first main electrode of said transistor (6) being coupled to said first subinput (20), a second main electrode of said transistor (6) being coupled to a first main electrode of said further transistor, a second main electrode of said further transistor (7) being coupled to said second subinput (21), and both control inputs of both transistors (6,7) being mutually coupled such that both transistors (6,7) are in a conductive, saturated state when said coupling has been made and are in a non-conductive state when said coupling has been interrupted.

7. Telecommunication device according to claim 4, 5 or 6, characterised in that said predefined impedance (4,5) comprises a passive element (4) being situated between a subinput (20) and said switch (6,7).

8. Telecommunication device according to claim 7, characterised in that said predefined impedance (4,5) comprises a further passive element (5) being situated between a further subinput (21) and said switch (6,7), added values of both passive elements (4,5) together forming said predefined impedance (4,5).
